# EUROPEAN PATENT APPLICATION

(11) **EP 3 741 876 A1**
(43) Date of publication of application: **25.11.2020**
(21) Application number: 19207093.6
(22) Date of filing: 05.11.2019
(51) Int. Cl.: C22C 21/00, C22C 21/16, F28F 21/08

(54) **BATTERY COOLING PLATE**

(30) Priority: 20.05.2019 EP 19175349
(71) Applicant: Aleris Rolled Products Germany GmbH, 56070 Koblenz (DE)
(72) Inventor: KIRKHAM, Steven, 56235 Ransbach-Baumbach (DE); RITZ, Fabian, 56244 Ötzingen (DE); LANDGRAF, Florian, 41363 Jüchen (DE)
(74) Representative: Dey, Michael

(57) **Abstract**

The invention relates to a battery cooling plate comprising a main body portion having opposed ends and a first and second outer surface each defining a primary heat transfer surface between said opposed ends, said main body portion comprising a first outer plate and a second outer plate; at least one fluid flow passage formed within said main body portion between said first and second outer plates; the fluid flow passage having a first end for inletting a fluid into said fluid passage and a second end for discharging said fluid from said fluid flow passage, said first and second ends defining a flow direction through said fluid flow passage; each of said first and second outer plates has a central, generally planar portion surrounded by a peripheral flange; wherein the first and second outer plates have been joined to each other by means of remote laser welding; wherein the first outer plate is made of a 3xxx-series aluminium alloy comprising Mn in a range of 0.5% to 1.5% and Mg is a range of up to 0.06%, and on its side facing said fluid flow passage is provide with a clad liner of a 4xxx-series aluminium alloy having Mg up to 0.35%; and wherein the second outer plate is made of a 3xxx-series aluminium alloy comprising Mn in a range of 0.5% to 1.5% and Mg is a range of up to 0.06%.

## Description

### FIELD OF THE INVENTION

The invention relates to a battery cooling plate and to a method of manufacturing such a battery cooling plate. The invention further relates to a battery module incorporating such a battery cooling plate.

### BACKGROUND TO THE INVENTION

Rechargeable batteries such as batteries made up of several lithium-ion cells can be used in many applications, including for example, electric propulsion vehicle ("EV") and hybrid electric vehicle ("HEV") applications. These applications often require advanced battery systems that have high energy storage capacity and can generate large amounts of heat that needs to be dissipated. Battery thermal management of these types of systems generally requires that the maximum temperature of the individual cells be below a predetermined, specified temperature.

Cold plate heat exchangers are heat exchangers upon which a stack of adjacent battery cells or battery cell containers housing one or more battery cells are arranged for cooling and/or regulating the temperature of a battery unit. The individual battery cells or battery cell containers are arranged in face-to-face contact with each other to form the stack, the stack of battery cells or battery cell containers being arranged on top of a cold plate heat exchanger such that an end face or end surface of each battery cell or battery cell container is in surface-to-surface contact with a surface of the heat exchanger.

Heat exchangers for cooling and/or regulating the temperature of a battery unit can also be arranged in between the individual battery cells or battery cell containers that form the stack or battery unit, the individual heat exchangers being interconnected by common inlet and outlet manifolds. Heat exchangers that are arranged or "sandwiched" between the adjacent battery cells or battery cell containers in the stack may sometimes be referred to as inter-cell elements (e.g. "ICE" plate heat exchangers) or cooling fins.

Heat exchangers for cooling and/or regulating the temperature of a battery unit can also be arranged in thermal contact with the bottom surface of a battery cell or a battery pack.

Temperature uniformity across the surface of an individual battery cell as well as the temperature uniformity of all the cells in the battery pack is of importance since the battery is a chemical reaction of which its performance is significantly affected by the temperature at which it runs. A thermal gradient in the battery will cause some cells to charge and discharge faster than others, causing battery pack durability issues. Accordingly, temperature uniformity across the surface of the heat exchanger is an important consideration in the thermal management of battery units since temperature uniformity across the surface of the heat exchanger helps to ensure that the temperature differential between individual battery cells in the overall battery unit is kept to a minimum.

A "heat exchanger for battery thermal management application" or a "battery cell heat exchanger" or a "battery cell cooler" or a "battery cooling plate" are expressions in the art for equivalent or similar devices.

With increasing dimensions of battery cooling plates, for example exceeding dimensions of about 0.6 by about 0.6 meters, it becomes increasingly difficult to produce leak tight battery cooling plates in an economical mode. With increasing length of the required joint for the peripheral flange the battery cooling plate and the internal joints for forming the cooling channel(s) the successful use of a brazing operation for large volumes of battery cooling plates is no longer feasible.

### DESCRIPTION OF THE INVENTION

As will be appreciated herein below, except as otherwise indicated, aluminium alloy designations and temper designations refer to the Aluminium Association designations in Aluminium Standards and Data and the Registration Records, as published by the Aluminium Association in 2018 and are well known to the person skilled in the art. The temper designations are laid down in European standard EN515.

For any description of alloy compositions or preferred alloy compositions, all references to percentages are by weight percent unless otherwise indicated.

The term "up to" and "up to about", as employed herein, explicitly includes, but is not limited to, the possibility of zero weight-percent of the particular alloying element to which it refers. For example, up to about 0.2% Cr may include an alloy having no Cr.

It is an object of the invention to provide a battery cooling plate for a battery block that can efficiently cool batteries via a coolant, the battery cooling plate is of sufficient strength and corrosion resistance. It is a further object of the invention to provide a battery cooling plate having large dimensions and can be produced on a large scale in a reliable manner.

These and other objects and further advantages are met or exceeded by the present invention and providing a battery cooling plate comprising of a main body portion having opposed ends and a first and second outer surface each defining a primary heat transfer surface between said opposed ends,
- said main body portion comprising a first outer plate and a second outer plate;
- at least one fluid flow passage formed within said main body portion between said first and second outer plates;
- the fluid flow passage having a first end for inletting a fluid into said fluid passage and a second end for discharging said fluid from said fluid flow passage, said first and second ends defining a flow direction through said fluid flow passage;
- optionally an inlet manifold or duct in fluid communication with said first end and an outlet manifold or duct in fluid communication with said second end;
- each of said first and second outer plates has a central, generally planar portion surrounded by a peripheral flange;
- wherein the first and second outer plates have been joined or secured to each other, preferably at least at their respective peripheral flange and preferably also within the main body to form at least one fluid flow passage, by means of remote laser welding without filler wire; and the remote laser welding has been performed without the use of a protective shielding gas;
- wherein the first outer plate is made of a 3xxx-series aluminium alloy comprising Mn in a range of 0.5% to 1.5% and Mg is a range of up to 0.06%, and on its side facing said fluid flow passage is provide with a clad liner of a 4xxx-series aluminium alloy having Mg up to 0.35%; and
- wherein the second outer plate is made of a 3xxx-series aluminium alloy comprising Mn in a range of 0.5% to 1.5% and Mg is a range of up to 0.06%.

In accordance with the invention it has been found that this arrangement of a battery cooling plate provides for a good strength level and a corrosion resistance battery cooling plate. The battery cooling plate can be of large dimensions, for example of about 0.6 by about 0.6 meters or larger, and these can be produced in high volumes with very low reject rates. The use of remote laser welding is an important feature of the invention and ensures high-quality and leak tight joints with a very low porosity level in the fusion weld, even without the use of a protective shielding gas. The absence of the requirement for a protective shielding gas avoids the use of a closed chamber filled with a protective gas used to limit pore formation during the remote laser welding operation, and which closed chamber would otherwise increase costs and reduce productivity. The use of remote laser welding in combination with at least one outer plate made from the defined 3xxx-series alloy having a clad liner of a 4xxx-series aluminium alloy facing the other outer plate is an important feature of the invention and ensures high-quality and leak tight joints with a very low porosity level in the fusion weld. By the use of a 4xxx-series clad liner having a low Mg-content in combination with outer plates made from 3xxx-series aluminium alloy having also a low Mg-content, the porosity level in the fusion weld after remote laser welding is very low, even at high line speeds of 10 m/min or higher making the process economical attractive, and it limits hot cracking and provides reliable leak tight joints of very long length. It has been found that by using the defined 4xxx-series clad liner the solidification path and the weld pool composition is altered in such a way that the porosity level in the fusion weld after remote laser welding is very low arriving and providing a reliable leak tight joint. The rejection rate during the production of a battery cooling plate of large dimensions is significantly lower compared to a battery cooling plate of similar design composed of two monolithic 3xxx-series aluminium alloy, thus devoid of a 4xxx-series clad liner, joined together by remote laser welding, whereas the quality of the joints is also improved.

The first outer plate is made from a 3xxx-series aluminium alloy comprising of, in wt.%: 0.5% to 1.4% Mn, preferably 0.6% to 1.2% Mn, and up to 0.06% Mg, Preferably the Mg content is up to 0.045%, and more preferably up to 0.02%.

In an embodiment the first outer plate is made from a 3xxx-series aluminium alloy comprising of, in wt.%:
0.5% to 1.5% Mn, preferably 0.6% to 1.2%, and more preferably 0.6% to 1.0%, up to 0.7% Cu, and preferably up to 0.25% or in a range of 0.2% to 0.7%,
up to 0.06% Mg, preferably up to 0.045% Mg, more preferably up to 0.02%, and most preferably the aluminium alloy is substantially free from Mg,
up to 0.9% Si, and preferably up to 0.5%, and more preferably up to 0.3%,
up to 0.7% Fe, preferably up to 0.5%, and more preferably in a range of 0.1% to 0.5%,
up to 0.2% Cr, preferably up to 0.09%, more preferably up to 0.04%,
up to 0.25% Zr, preferably up to 0.09%, more preferably up to 0.04%,
up to 0.2% Ti, preferably 0.03% to 0.2%, more preferably 0.03% to 0.12%,
up to 1.2%, preferably up to 0.4% Zn, more preferably up to 0.25%,
balance aluminium and impurities. Typically impurities are each up to 0.05% maximum and in total about 0.25% maximum, and preferably in total not exceeding 0.15%.

In particular the alloying element Mn and optional Cu provide the required strength to the outer plate material, both for the plate material itself as well as for the subsequent remote laser welded joint. However, if the Mn level is too high there is an increasing risk of the formation of undesirable large intermetallic phases. Cu can be a strengthening element in the aluminium alloy employed according to this invention, but it has been found that a too high level it may adversely affect the corrosion performance. In an embodiment the Cu content in the 3xxx-series alloy does not exceed about 0.25%, and more preferably is less than 0.15%, to limit hot cracking at very high line speeds. It is important to maintain a very low level of Mg in the 3xxx-series aluminium alloy to limit hot cracking and to control the porosity formation during the remote laser welding operation without the use of a filler wire in particular at high line speeds.

In an embodiment the second outer plate is made from the same 3xxx-series aluminium alloy as of the first outer plate.

In an embodiment the 3xxx-series aluminium alloy has a composition consisting of, in wt.%, 0.5% to 1.5% Mn, up to 0.7% Cu, up to 0.06% Mg, up to 0.9% Si, up to 0.7% Fe, up to 0.2% Cr, up to 0.25% Zr, up to 0.2% Ti, up to 1.2% Zn, balance aluminium and impurities, and with preferred narrower compositional ranges as herein described and claimed.

In an embodiment the combined sum of the Mg content in 3xxx-series alloy of an outer plate and the 4xxx-series aluminium alloy clad liner provided thereon does not exceed 0.07%. In an embodiment it does not exceed 0.05%. In a preferred embodiment it does not exceed 0.03%.

In an embodiment the 3xxx-series aluminium alloy of the first and second outer plate are provided in an O, H1x, or H2x temper, wherein x has a value from 1 to 8, such as for example the H14, H18, H22, H24 and H26 temper.

In an embodiment the subject first or second outer plate is provided in a H18 temper as this provides highest strength and only limited formability and is ideally suited for the outer plate not being substantially formed in a forming operation requiring a high deformation degree, for example as the case would be with deep drawing.

In an embodiment the subject first or second outer plate is provided in a H26 temper as this provides generally higher strength compared to O, H22 and H24 tempers, while having somewhat improved formability compared to the H18 temper.

In another embodiment the subject first or second plate is provided in a softer temper, e.g. O, H22 or H24, which allows the subject plate to be formed into the side of the battery cooling plate incorporating the channel(s) of the fluid flow passage.

In an embodiment the first and second outer plates have a thickness in a range of about 0.2 mm to 4 mm. A preferred lower-limit for the thickness is about 0.3 mm. A preferred upper-limit for the thickness is about 2 mm, and more preferably about 1.5 mm.

In an embodiment the clad liner is solely applied on the side of the first and second outer plates facing the at least one fluid flow passage formed within said main body portion between said first and second outer plates.

In accordance with the invention at least the first outer plate is provided with a clad liner on its side facing the fluid flow passage or channel within the main body portion of the battery cooling plate.

In an embodiment also the second outer plate is provided with a clad liner on its side facing the fluid flow passage or channel within the main body portion of the battery cooling plate.

In an embodiment the thickness of the clad liner on the first outer place is in a range of 3% to 20% of the total plate thickness (thickness of the outer plate and the clad liner combined). A preferred lower-limit is 5% of the total plate thickness. A preferred upper-limit is 16% of the total plate thickness.

In an embodiment the thickness of the clad liner on the second outer place is in a range of 3% to 20% of the total plate thickness. A preferred lower-limit is 5% of the total plate thickness. A preferred upper-limit is 16% of the total plate thickness.

In an embodiment a 4xxx-series alloy clad liner is applied on each side or face of the first and second outer plates. This provides additional galvanic protection to the 3XXX-series alloy layer of the battery cooling plate.

In another embodiment the 4xxx-series alloy clad liner is applied on the side of the first and second outer plates facing the at least one fluid flow passage formed within said main body portion of the battery cooling plate, and whereby a corrosion protective liner of a different aluminium alloy is applied on the other face or side of at least the first or second outer plates, and preferably on each of the first or second outer plates. Such a corrosion protective liner could be made of an aluminium alloy having up to about 3.5% Zn, and preferably up to 2% Zn. A particular example of such an alloy would be the AA7072 alloy, or modifications thereof. Such a corrosion protective layer would preferably have a thickness in a range of 3% to 20% of the total plate thickness (thickness of the outer plate and all liners combined).

In accordance with the invention the clad liner is made from a 4xxx-series aluminium alloy having up to 0.35% Mg to facilitate the remote laser welding operation without a filler wire. When welded, said clad liner alloy mixes into the weld zone and prevents cracking. The clad liner material mixes with the 3xxx-series aluminium alloy of the first and second outer plate within the weld pool.

In an embodiment the clad liner is made from a 4xxx-series aluminium alloy having about 5% to 14% Si and up to 0.35% Mg. More preferably the Si content is up to about 12%. The Mg level is preferably up to 0.10%, and more preferably up to 0.04%, and most preferably the aluminium alloy is substantially free from Mg. The balance is made by aluminium and unavoidable impurities, which in practical terms would mean up to 0.7% Fe, up to 0.25% Mn, preferably up to 0.15% Mn, up to 0.25% Cu, preferably up to 0.1 % Cu, up to 0.25% Zn, preferably up to 0.1% Zn, up to 0.1% Cr, preferably up to 0.05% Cr, up to 0.15% Ti, other impurities each <0.05% and total <0.2%, remainder aluminium.

In another embodiment the clad liner is made from a 4xxx-series aluminium alloy having about 5% to 14% Si, 0.25% to 4% Zn and up to 0.35% Mg. More preferably the Si content is up to about 12%. The Mg level is preferably up to 0.10%, and more preferably up to 0.04%, and most preferably the aluminium alloy is substantially free from Mg. The purposive addition of Zn to the clad liner ensures increased galvanic protection to the 3XXX-series aluminium alloy against. The Zn content is preferably up to 3.5%, and more preferably up to 3.0%. A preferred lower limit for the Zn content is 0.5%. The balance is made by aluminium and unavoidable impurities, which in practical terms would mean up to 0.7% Fe, up to 0.25% Mn, preferably up to 0.15% Mn, up to 0.25% Cu, preferably up to 0.1% Cu, up to 0.1% Cr, preferably up to 0.05% Cr, up to 0.15% Ti, other impurities each <0.05% and total <0.2%, remainder aluminium.

In an embodiment the 4xxx-series aluminium alloy clad liner further contains one or more wetting elements or elements modifying the surface tension of a molten Al-Si brazing material. Preferably the elements are selected from the group consisting of Be, Bi, Ce, La, Li, Na, Pb, Se, Sb, Sr, Th, and Y, and wherein the total amount of the wetting element(s) is in a range of about 0.005% to 0.8%. In a preferred embodiment the upper-limit for the total amount of wetting element(s) is about 0.5%, and more preferably about 0.25%.

In an embodiment Sr is added up to 500 ppm, preferably in a range of 50 ppm to 500 ppm.

In an embodiment Na is added up to 250 ppm, preferably in a range of 15 ppm to 200 ppm.

The clad liner can be applied to the 3xxx-series aluminium outer plate material via various techniques known in the art. For example, by roll bonding as is well known and most practised in the art. Alternatively the 3xxx-series alloy and clad liner can be manufactured simultaneously by means of co-casting techniques, for example as disclosed in international patent document WO-2004/112992-A2. In these embodiments the clad liner covers essentially the whole face or side of the 3xxx-series outer plate material.

In another embodiment the clad liner is applied substantially only along the path of a surface to be welded. The clad liner can be applied by spraying techniques, for example by thermal spraying as well as by means of cold spraying techniques (otherwise known as cold gas dynamic spraying). In the cold spraying approach, solid powders are accelerated in supersonic gas jets to velocities of between 200-100 meters per second. In cold spraying, the feedstock is not fed into a flame or arc but is instead fed into a gas stream. The transit time of the feedstock in the gas stream is not sufficient to cause melting of the feedstock. This has the advantages that the powder remains in the solid phase, lower substrate surface temperatures, less oxidation of the powder and the substrate material, no metallurgical transformations and reduced residual stress formation. The powder is accelerated and impacts on the substrate surface where local heating and bonding occur. By repeating this process, a near fully dense clad liner layer of defined thickness can be constructed.

In an embodiment the battery cooling plate incorporates dimples in the at least one fluid flow passage or cooling channel to provide more structural integrity to the passage or channel. Furthermore, such dimples may act as turbulators.

In an embodiment the battery cooling plate comprises more than one fluid flow passage, for example a first, second, and third fluid flow passage or cooling channel.

The invention further relates to a battery module ideally for an electric propulsion vehicle or a hybrid electric vehicle, the battery module comprising a battery pack including multiple battery cells, and at least one battery cooling plate according to the invention disposed in thermal contact with at least one adjacent battery cell whereby in operation a coolant can flow through the at least one fluid flow passage in the battery cooling plate to cool said adjacent battery cell(s). In practice this means for example that one of the outer surfaces of the battery cooling plate defining the primary heat transfer surface is in thermal contact with the bottom surface of a battery block or battery pack.

The invention relates also to a cold plate heat exchanger incorporating at least one battery cooling plate of this invention.

The invention relates also to an ICE plate heat exchanger incorporating at least one battery cooling plate of this invention.

The invention further relates to a method of manufacturing a battery cooling plate
according to this invention comprising the steps of:
- providing a sheet material for a first outer plate made of the 3xxx-series aluminium alloy provided on one face with a 4xxx-series aluminium alloy clad liner as herein described and claimed;
- providing a sheet material for a second outer plate made of the 3xxx-series aluminium alloy and preferably provided on one face with a 4xxx-series aluminium alloy clad liner as herein described and claimed;
- stamping a pair of complementary outer plates using one or more dies; depending on the design of the battery cooling plate, the first and second outer plates are symmetrical and each of the complementary plates is identical or alternatively the outer plates are asymmetrical;
- aligning the pair of complementary outer plates such that the 4xxx-series aluminium alloy clad liner material is facing the fluid flow passage or cooling channel within the main body portion of the battery cooling plate;
- optionally inserting inlet and outlet manifolds or ducts into receptacles formed on the outer plates;
- joining or securing by means of remote laser welding without a filler wire the pair of complementary outer plates, at least at their respective peripheral flange and preferably also within the main body to form at least one fluid flow passage, to form the battery cooling plate or battery cell cooler; the joining is by directing a laser beam at an area of an outer plate wherein the laser beam produces a narrow fusion zone in the area where it strikes the surface of the subject outer plate, the fusion zone extending through one of the first and second plate plates and at least partially through the adjoining one of the first and second outer plates, wherein the fusion zone contains a molten metal mixture comprising the 3xxx-series alloy of the first and second outer plate and of the clad liner of the 4xxx-series; and allowing the fusion zone to cool and solidify to form a weld joint or fusion weld between the first and second outer plates;
and wherein preferably the remote laser welding is performed without the use of a protective shielding gas; the remote laser beam welding operation allows for line speeds in excess of 10 m/min enabling a high level of automation; and wherein the outer plates together form at least one fluid flow passage or channel, the fluid flow passage having an inlet end, an outlet end and preferably dimples or ribs along the length of the fluid flow passage, and the fluid flow passage preferably having an inlet manifold or duct and an outlet manifold or duct, the inlet manifold or duct being in fluid communication with the inlet of the fluid flow passage and the outlet manifold or duct being in fluid communication with the outlet end of the fluid flow passage.

The invention further relates to the use and to a method of use of the 3xxx-series aluminium alloy having a composition comprising of, in wt.%, 0.5% to 1.5% Mn, up to 0.7% Cu, up to 0.06% Mg, up to 0.9% Si, up to 0.7% Fe, up to 0.2% Cr, up to 0.25% Zr, up to 0.2% Ti, up to 1.2% Zn, balance aluminium and impurities, and with preferred narrower compositional ranges as herein described and claimed, and provided on one face with a clad liner of a 4xxx-series aluminium alloy having up to 0.35% Mg, and with preferred narrower compositional ranges as herein described and claimed, as outer plate material for a battery cooling plate, preferably joined or secured to each other by means of remote laser welding without a filler wire.
Fig. 1 is a perspective view of a battery cooling plate according to an example embodiment according to the invention.
Fig. 2 is a perspective view of a battery cooling plate according to another example embodiment according to the invention.
Fig. 3A and Fig. 3B is a schematic of the arrangement of the first and second outer plate before and after remote laser welding without a filler wire.

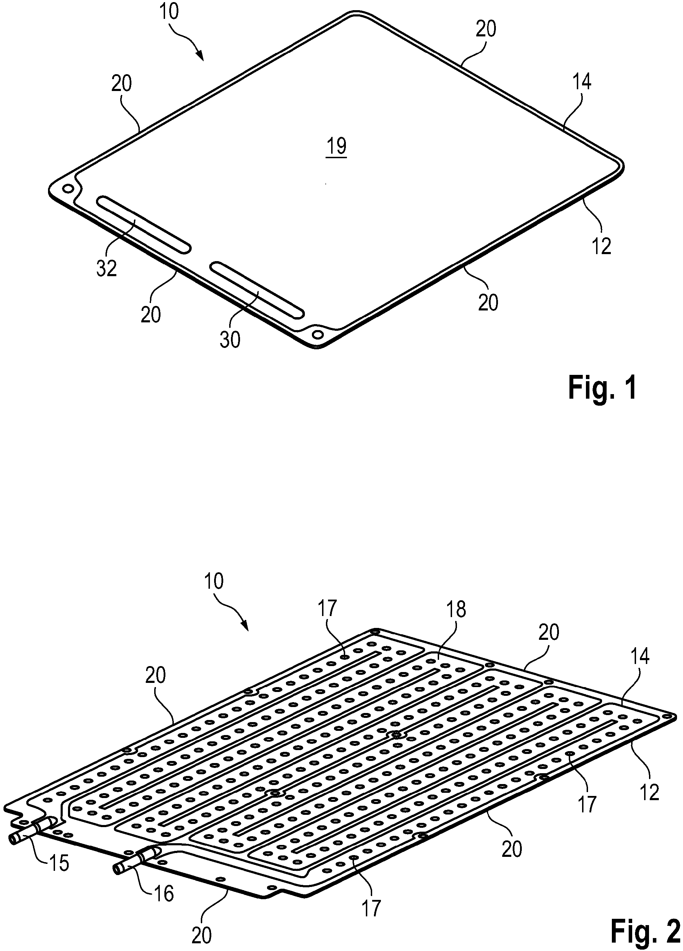

Referring to Fig. 1, there is shown an example embodiment of a battery cooling plate 10 according to an example embodiment of the present invention. As shown, the battery cooling plate 10 is comprised of a pair of outer plates 12,14. Outer plates 12,14 each define a central, generally planar portion 19 that is surrounded by a peripheral flange 20. It is desired that the battery cooling plate be flat or planar to maintain good thermal contact with an adjacent battery cells or battery packs (not shown). The central, generally planar portion 19 of each of the plates 12,14 projects out of the plane of the peripheral flange 20 so that when the outer plates 12,14 are assembled together, interior spaces or gaps are formed defining at least one fluid flow passage. The peripheral flange 20 of the respective outer plate 12,14 are joined or secured together by means of remote laser welding without filler wire in accordance with the invention providing a fluid tight seal. Inlet and outlet openings 30,32 are arranged along the end of the width of the plates 12,14. The inlet 30 opening can be provided with an inlet manifold or duct (not shown) in fluid communication with said inlet or first end and an outlet manifold or duct (not shown) in fluid communication with said outlet 32 or second end. The positioning of the inlet and outlet openings is not part of or critical to the present invention and may vary with the design of the battery cooling plate as in well-known to the skilled person in the art.

Referring to Fig. 2 there is shown an example embodiment of a battery cooling plate 10 according to another example embodiment of the present invention. As shown, the battery cooling plate 10 is comprised of a pair of outer plates 12,14. Outer plates 12,14 each define a central, generally planar portion defining a primary heat transfer surface that is surrounded by a peripheral flange 20. The central, generally planar portion of each of the plates 12,14 projects out of the plane of the peripheral flange 20 so that when the outer plates 12,14 are assembled together, interior spaces or gaps are formed defining at least one fluid flow passage or channel 18, in this case the fluid flow passage has a serpentine shaped flow passage, but many variations to this design are feasible and not limiting to this invention. The fluid flow passage 18 has dimples 17 positioned centrally along the length of the fluid flow passage 18 to provide more structural integrity to the flow passage and acts as turbulators enhancing the heat transfer efficiency. The peripheral flange 20 of the respective outer plate 12,14 are joined together by means of remote laser welding without filler wire in accordance with the invention providing a fluid tight seal. Also the fluid flow passage 19 is formed by joining together the outer plates 12,14 by means of remote laser welding without filler wire providing a fluid tight seal. Inlet and outlet openings are arranged along the end of the width of the plates 12,14. The inlet opening can be provided with an inlet duct 15 in fluid communication with said inlet or first end and an outlet duct 16 in fluid communication with said outlet or second end.

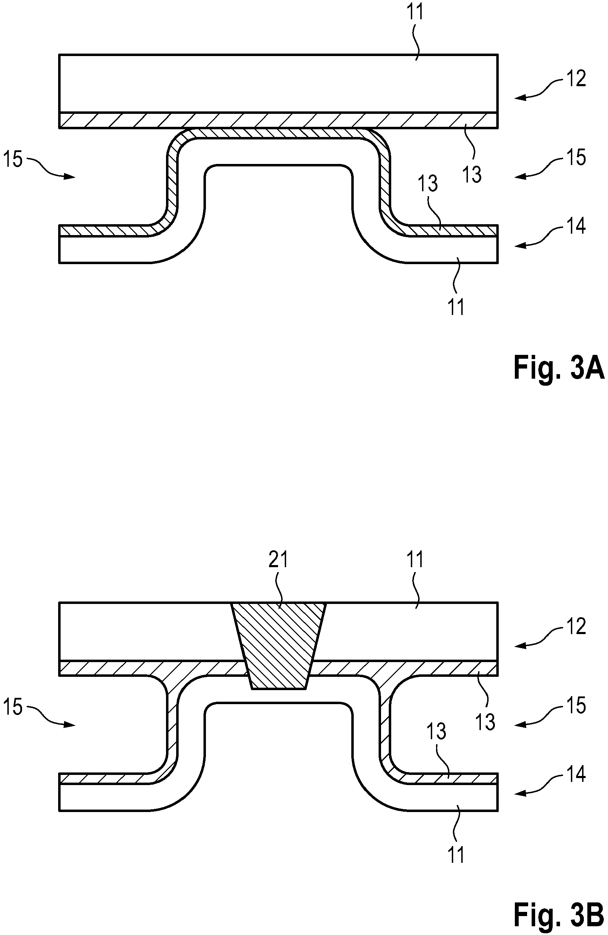

Referring to Fig. 3A there is shown schematically a first outer plate 12 and a second outer plate 14 each being made of a 3xxx-series aluminium alloy sheet 11 as herein described and claimed and provided with a thin clad liner 13 on its respective side facing the fluid flow passage 18. In this embodiment the first outer plate 12 is flat, whereas the second outer plate 14 has been formed, for example by means of deep drawing, to create or form the shape of the fluid flow channel 18.

Referring to Fig. 3B there is shown schematically the arrangement of Fig. 3A after being joint to each other by means of remote laser welding the use without of filler wire. In this example there has been only partial penetration of the weld zone 21 into the second outer plate 14; however, full penetration is also possible. In this embodiment the fluid flow passages 18 is located on either side of the joint. When remote laser welded without a filler wire, the 4xxx-series alloy of said clad liner 13 mixes into the weld zone 21 and preventing cracking. The low levels of Mg in both the 3xxx-series alloy and the 4xxx-series clad liner alloy contribute to a high-quality joint having very low levels of porosity and contribute also to hot crack prevention during the remote laser welding operation without a filler wire.

While various embodiments of the technology described herein have been described in detail, it is apparent that modifications and adaptations of those embodiments will occur to those skilled in the art. However, it is to be expressly understood that such modifications and adaptations are within the spirit and scope of the presently disclosed technology.

## Claims

1. Battery cooling plate comprising of a main body portion having opposed ends and a first and second outer surface each defining a primary heat transfer surface between said opposed ends,
- said main body portion comprising a first outer plate and a second outer plate;
- at least one fluid flow passage formed within said main body portion between said first and second outer plates;
- the fluid flow passage having a first end for inletting a fluid into said fluid passage and a second end for discharging said fluid from said fluid flow passage, said first and second ends defining a flow direction through said fluid flow passage;
- each of said first and second outer plates has a central, generally planar portion surrounded by a peripheral flange;
- wherein the first and second outer plates have been joined to each other by means of remote laser welding;
- wherein the first outer plate is made of a 3xxx-series aluminium alloy comprising Mn in a range of 0.5% to 1.5% and Mg is a range of up to 0.06%, and on its side facing said fluid flow passage is provide with a clad liner of a 4xxx-series aluminium alloy having Mg up to 0.35%; and
- wherein the second outer plate is made of a 3xxx-series aluminium alloy comprising Mn in a range of 0.5% to 1.5% and Mg is a range of up to 0.06%.

2. Battery cooling plate according to claim 1, wherein the second outer plate is made of a 3xxx-series aluminium alloy comprising Mn in a range of 0.5% to 1.5% and Mg is a range of up to 0.06%, and on its side facing said fluid flow passage is provide with a clad liner of a 4xxx-series aluminium alloy having Mg up to 0.35%.

3. Battery cooling plate according to claim 1 or 2, wherein the first outer plate has a thickness in a range of 0.2 mm to 4 mm.

4. Battery cooling plate according to any one of claims 1 to 3, wherein the second outer plate has a thickness in a range of 0.2 mm to 4 mm.

5. Battery cooling plate according to any one of claims 1 to 4, wherein the thickness of the clad liner of the first outer plate is in a range of 3% to 20% of the total outer plate thickness.

6. Battery cooling plate according to any one of claims 2 to 5, wherein the thickness of the clad liner of the second outer plate is in a range of 3% to 20% of the total outer plate thickness.

7. Battery cooling plate according to any one of claims 1 to 6, wherein the first outer plate is made from a 3xxx-series aluminium alloy comprising, in wt.%,
0.5% to 1.5% Mn, preferably 0.6% to 1.2%,
up to 0.7% Cu,
up to 0.06% Mg,
up to 0.9% Si,
up to 0.7% Fe,
up to 0.2% Cr,
up to 0.25% Zr,
up to 0.2% Ti,
up to 1.2% Zn,
balance aluminium and impurities.

8. Battery cooling plate according to any one of claims 1 to 7, wherein the second outer plate is made from a 3xxx-series aluminium alloy comprising, in wt.%,
0.5% to 1.5% Mn, preferably 0.6% to 1.2%,
up to 0.7% Cu,
up to 0.06% Mg,
up to 0.9% Si,
up to 0.7% Fe,
up to 0.2% Cr,
up to 0.25% Zr,
up to 0.2% Ti,
up to 1.2% Zn,
balance aluminium and impurities.

9. Battery cooling plate according to any one of claims 1 to 8, wherein the 3xxx-series aluminium alloy of the first and second outer plates are provided in a O, H1 or H2 temper.

10. Battery cooling plate according to any one of claims 1 to 9, wherein the composition of the clad liner on the first outer plate is made from a 4xxx-series aluminium alloy comprising, in wt.%, 5% to 14% Si, preferably 5% to 11% Si, and up to 0.35% Mg, preferably up to 0.10% Mg.

11. Battery cooling plate according to any one of claims 2 to 10, wherein the composition of the clad liner on the second outer plate is made from a 4xxx-series aluminium alloy comprising, in wt.%, 5% to 14% Si, preferably 5% to 11% Si, and up to 0.35% Mg, preferably up to 0.10% Mg.

12. Battery cooling plate according to any one of claims 2 to 10, wherein the composition of the clad liner on the second outer plate is made from a 4xxx-series aluminium alloy comprising, in wt.%, 5% to 14% Si, preferably 5% to 11% Si, 0.25% to 4% Zn, and up to 0.35% Mg, preferably up to 0.10% Mg.

13. Battery module comprising a battery pack including multiple spaced apart battery cells, and at least one battery cooling plate according to any one of claims 1 to 12 disposed in thermal contact with at least one adjacent battery cell whereby in operation a coolant can flow through a fluid flow passage in the battery cooling plate to cool an adjacent battery cell.

14. Method of manufacturing a battery cooling plate according to any one of claims 1 to 12, comprising the steps of,
- providing a sheet material for a first outer plate made of the 3xxx-series aluminium alloy provided on one face with a clad liner according to any one of claims 1 to 12;
- providing a sheet material for a second outer plate made of the 3xxx-series aluminium alloy and preferably provided on one face with a clad liner according to any one of claims 1 to 12;
- stamping a pair of complementary outer plates using one or more dies;
- aligning the pair of complementary outer plates such that the clad liner material is facing the fluid flow passage or channel within the main body portion of the battery cooling plate; and
- joining the pair of complementary outer plates by means of remote laser welding without a filler wire to form the battery cooling plate.

15. Method according to claim 14, further comprising the step of inserting inlet and outlet manifolds into receptacles formed on the outer plates, and wherein the outer plates together form at least one fluid flow passage, the fluid flow passage having an inlet end and an outlet end, and the fluid flow passage having an inlet manifold and an outlet manifold, the inlet manifold being in fluid communication with the inlet of the fluid flow passage and the outlet manifold
